# EUROPÄISCHE PATENTSCHRIFT

(11) **EP 2 435 375 B1**
(45) Veröffentlichungstag und Bekanntmachung des Hinweises auf die Patenterteilung: **29.05.2013**
(21) Anmeldenummer: 10706518.7
(22) Anmeldetag: 19.02.2010
(51) Int. Cl.: C03B 3/00

(54) **VERFAHREN UND VORRICHTUNG ZUM BESCHICKEN VON GLAS-SCHMELZÖFEN MIT SCHÜTTFÄHIGEN GLASGEMENGEN**
METHOD AND DEVICE FOR SUPPLYING GLASS MELTING FURNACES WITH FREE FLOWING GLASS MIXTURES
PROCÉDÉ ET DISPOSITIF D'ENFOURNEMENT DE FRITTE DE VERRE, APTE À ÊTRE VERSÉE, DANS UNE ARCHE À FRITTER

(30) Priorität: 26.05.2009 DE 102009022696
(43) Veröffentlichungstag der Anmeldung: 04.04.2012
(73) Patentinhaber: Beteiligungen Sorg GmbH & Co. KG, 97816 Lohr am Main (DE)
(72) Erfinder: WALTERT, Erich, 97837 Erlenbach (DE)
(74) Vertreter: KEIL & SCHAAFHAUSEN Patentanwälte
(86) Internationale Anmeldenummer: PCT/EP2010/001041
(87) Internationale Veröffentlichungsnummer: WO 2010/136087

(56) Entgegenhaltungen:
- EP-A2- 0 282 939
- DE-A1- 1 471 888
- US-A- 2 593 535
- ARGENT R D: "THE DOUGHOUSE SYSTEM" GLASS TECHNOLOGY, SOCIETY OF GLASS TECHNOLOGY, SHEFFIELD, GB, Bd. 35, Nr. 2, 1. April 1994 (1994-04-01), Seiten 61-65, XP000439146 ISSN: 0017-1050
- EFREMENKOV V V ET AL: "DOUBLE-SCREW FEEDER FOR DOSING THE HUMECTANT CAKING COMPONENTS OF THE GLASS MIXTURE" GLASS AND CERAMICS, SPRINGER, NEW YORK, NY, US, Bd. 55, Nr. 7/08, 1. Juli 1998 (1998-07-01), Seite 241/242, XP000832147 ISSN: 0361-7610

## Beschreibung

Die Erfindung betrifft ein Verfahren zum Beschicken von Glas-Schmelzöfen, die mindestens ein Doghouse aufweisen, mit schüttfähigen Glasmengen mittels
a) Transporteinrichtungen für die Einführung der Glasmenge durch eine Doghouse-Öffnung oberhalb des Glasspiegels und
b) mittels eines periodisch über einen Schiebearm angetriebenen Schiebers für die Verteilung der Glasmenge auf der Glasschmelze, wobei
c) die Transporteinrichtung und der Schieberarm an einem verfahrbaren Geräterahmen gelagert sind, der in Richtung auf das Doghouse verfahrbar ist, und zumindest weitgehend abgedichtet durch die Doghouse-Öffnung hindurchgeführt werden.

Durch die US-A-4 854 959 und die entsprechenden DE 37 09 178 C2 und EP 0 282 939 A3 ist es bekannt, bei Vorrichtungen zur Beschickung von Glasschmelzöfen eine rinnenförmige Chargiereinrichtung (in der Fachliteratur auch als "Schurre" bezeichnet) für die Zufuhr von Glasbildnem mit einem Schieber (in der Fachliteratur auch als "Pusher" bezeichnet) zur portionsweisen Verteilung der Glasbildner auf der Schmelzenoberfläche zu kombinieren. Beide werden durch einen Hitzeschild von der Atmosphäre in die Ofenkammer eingeführt. Während die Chargiereinrlchtung mit einer relativ hohen Frequenz vibrierend in Längsrichtung bewegt wird, wird der Schieber mit sehr viel niedrigerer Frequenz durch getrennte Antriebe für waagrechte und senkrechte Bewegungen angetrieben, die rechteckige Bewegungsübergänge erzeugen. Die Rinne der Chargiereinrichtung hat einen rechteckigen Querschnitt mit einem ebenen, aber in Richtung auf den Ofen abwärts geneigten Boden, so dass es nicht möglich ist, den Strom an Beschickungsgut gezielt auf der Schmelzenoberfläche in unterschiedlichen Richtungen und Mengen zu verteilen. Hinzu kommt eine schwierige Abdichtung der Ofenkammer gegen Eintritte von Umgebungsluft und Austritte von Verbrerinungsgasen und Hitzestrahlung, beides Effekte, die sowohl den Ofenbetrieb als auch die Umwelt stören oder schädigen. Auch ist die Verschiebung des Beschickungsguts auf der Schmelzenoberfläche durch die Hubrichtung des Schiebers vorgegeben und damit eingeschränkt. Ausserdem ist eine solche Vorrichtung teuer und wartungsintensiv und hat sich in der Praxis nicht durchgesetzt

Es ist durch offenkundige Vorbenutzung seitens der Anmelderin auch bereits bekannt, unmittelbar vor der Unterkante der Rinne oder Schurre einen keilförmigen Aufsatz anzuordnen, der den Mengenstrom an Beschickungsgut unterteilt. Aber auch damit ist es nicht möglich, die Mengenströme beiderseits des Aufsatzes gezielt und unabhängig voneinander zu verändern; im Gegenteil, einmal vorhandene Verteilungsmuster im Rinnenquerschnitt werden dadurch fixiert.

Durch das DE 83 04 858 U1 ist eine Einlegevorrichtung für einen Glas-schmelzofen bekannt, die aus einer Kombination einer Förderrinne mit einem rechteckigen Innenquerschnitt als Transportweg für Beschickungsgut und einem Schieber besteht, der dort als Gemengestreichvorrichtung bezeichnet ist. Die Förderrinne ist mit einem Vibrationsantrieb verbunden, der Schieber mit einem Kurbeltrieb, der einen Bewegungsablauf in Form eines flachen Elliptoides erzeugt. Durch den Aufbau auf einer Schwenkeinrichtung, wie sie aus dem Kranbau bekannt ist, kann mit der Kombination eine weiträumige Schwenkbewegung ausgeführt werden, um das Beschickungsgut auch in seitlicher Richtung auf der Glasschmelze zu verteilen. Für eine teilweise Abdichtung des Ofenraums ist ein Hitzeschild vorgesehen, der wegen der für die Schwenkbewegung notwendigen grossen Öffnung in der Ofenwand als Sektor eines hohlen Zylindermantels ausgebildet ist, der in seiner Mitteistellung nach beiden Seiten weit über die Öffnung übersteht. Für die Hindurchführung der obigen Kombination mit ihren Toleranzen und Freiheitsgraden besitzt der Hitzeschild eine Öffnung, die in der Draufsicht einen Querschnitt in Form eines auf dem Kopf stehenden "T" hat. Dieser Querschnitt beträgt etwa ein Viertel bis Drittel des Querschnitts der Öffnung in der angrenzenden Ofenwand. Hinzu kommt noch ein Ringspalt zwischen der Unterkante des Hitzeschildes und dem unteren Rand der Öffnung in der Ofenwand. Infolgedessen ist die Abdichtwirkung beschränkt. Für die Einstellung unterschiedlicher Mengenströme innerhalb der Breite des gesamten Mengenstroms an Beschickungsgut besitzt auch dieser Stand der Technik keine Mittel.

Durch die GB 1 364 187 A ist es bekannt, am Beschickungsende eines Glasschmelzofens, der kein Dog-House aufweist, zwei Gewindeförderer für Glasrohstöffe anzuordnen, die unter einem Winkel von 90 Grad zueinander ausgerichtet sind: Dadurch soll eine Technik erreicht werden, die als "batch swing technique" bezeichnet wird. Ein Schieber für die Vorgabe einer Transportrichtung der Glasrohstoffe und deren Unterteilung in Portionen, die auf der Schmelzenoberfläche schwimmen, ist nicht vorgesehen. Vielmehr sollen durch unterschiedlich starke Fördermengen pro Zeiteinheit überlagerte Förderrichtungen erzwungen werden, die alternierend auf die eine oder andere Seitenwand der Schmelzwanne ausgerichtet sind. Die Umsteuerung der Fördermengen geschieht dabei in Abhängigkeit von lokalen Temperaturmessungen der Schmelze, und die gesamte Fördermenge wird zusätzlich in Abhängigkeit von der Lage des Schmelzenspiegels geregelt. Derartige Regelverfahren sind jedoch wegen der Trägheit der Temperaturänderungen stark zeitabhängig und damit ungenau. Insbesondere ist aber der Ofeninnenraum über der Schmelze nicht gegenüber dem Beschickungsbereich abgedichtet. Hinzu kommt, dass die Fördereinrichtungen jeweils unter getrennten Silos angeordnet sind, wodurch der Bauaufwand vergrössert wird und die Nachfüllungen doppelt so oft erforderlich sind.

Die US 2 509 390 A geht von der Aufgabe aus, die Oberfläche einer Glasschmelze über die gesamte Wannenbreite möglichst gleichmässig mit einer geschlossenen Schicht aus Chargiergut zu bedecken. Folgerichtig fehlt dieser Vorrichtung zunächst einmal ein Schieber für die Unterteilung in Portionen und den gerichteten Transport dieser Portionen auf der Schmelzenoberfläche. Die dominierenden Komponenten der Transportrichtungen verlaufen parallel zur Längsachse der Schmelzwanne. Unterhalb von vier linear verfahrbaren Transportbehältern sind zwei um je eine senkrechte Achse schwenkbare Zwischenspeicher mit schlitzförmigen Bodenöffnungen angeordnet, die zu Zwecken einer Dosierung mit regelbaren Verschlussplatten versehen sind. Die Schwenkbewegungen sollen dazu diesen, zwei grossflächigen Stoffströmen auf der Schmelze bestimmte Richtungen zu erteilen. Diese vielachsigen Bewegungen erfordern eine Vielzahl von Stellgliedern, die auch entsprechend überwacht werden müssen. Unabhängig davon aber hat die Beschickungsanlage eine ganz enorme Bauhöhe und eine Breite, die der Breite der Schmelzwanne entspricht und infolgedessen für die Beschichtung einer Schmelzwanne über ein Doghouse völlig ungeeignet ist.

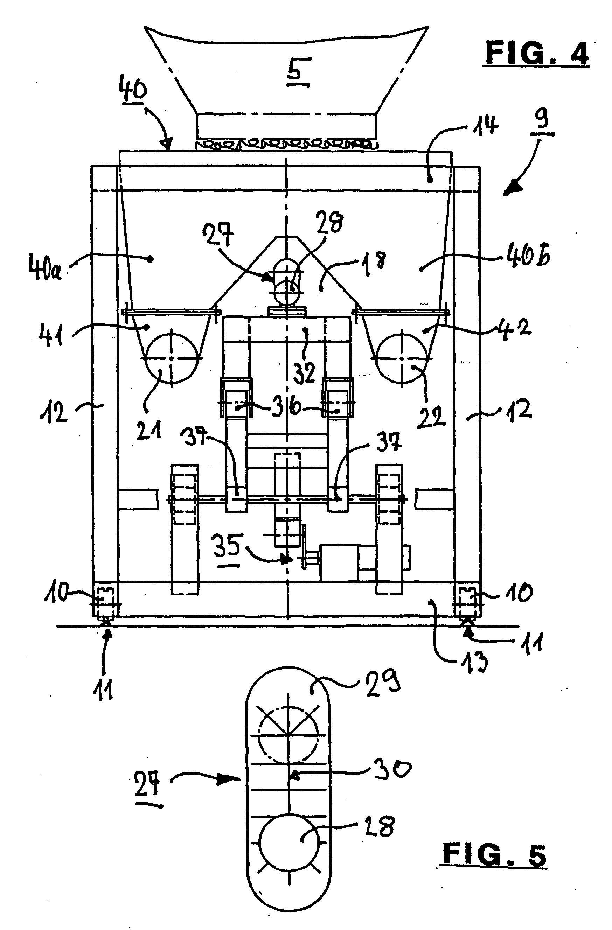

Durch die DE 1 471 888 A ist es bekannt, das Doghouse, dort korrekt als "Hundehütte" übersetzt, eines Glas-Schmelzofens mit zahlreichen Bauteilen zu umgeben, die auf ortfesten Gestellen befestigt sind. Eine Befestigung an einem gemeinsamen Rahmen oder auf einem Fahrgestell ist nicht offenbart und wegen der dort nowenigen rechtwinkligen Antriebs-Bewegungen auch nicht möglich. Das Doghouse selbst ist nach oben hin offen, um das Beschickungsgut in freiem Fall einbringen und seine Schichtdicke von der Seite her zu vergleichmässigen und es dann von der Stirnseite her in die Schmelzwanne einzuschieben. Damit ist eine Abdichtung gegen Verstaubung der Umgebung durch austretende Verbrennunggase nicht zu erreichen, und auch nicht ein unkontrolliertes Eindringen von Umgebungsluft in den Ofen. Das unkontrollierte Eindringen von Umgebungsluft wirkt sich störend auf die Druckregelung im Ofenraum aus und führt zu unerwünschter Bildung von NOx.Besonders voluminös sind dabei zwei Bunker mit jeweils einem schrägen Trichter, an deren Enden klappenförmige Verschlüsse angeordnet sind. Auch diese Bunker sind an einer hohen ortsfesten Plattform befestigt. Allein das Schaltbild gemäss der Figur 4 zeigt, welcher Aufwand an Steuerleitungen und Antrieben zu treiben ist, um eine verfahresgemässe Kooperation aller Komponenten zu erreichen.

Der Erfindung liegt die Aufgabe zugrunde, ein Verfahren und eine Vorrichtung anzugeben, mit denen es möglich ist, das Beschickungsgut für Glas-Schmelzöfen bei kleinstmöglichem Aufwand für Herstellung, Betrieb und Unterhaltung in den Ofen einzuführen und darin gezielt auf der Schmelz-Oberfläche zu verteilen und dabei weitgehend den Innenraum des Ofens gegenüber Staubaustritt und Eintritt von Luft aus der Umgebung abgedichtet zu halten.

Die gestellte Aufgabe wird bei dem eingangs angegebenen Verfahren erfindungsgemäss dadurch gelöst, dass
d) die Glasmenge den Transporteinrichtungen aus einem gemeinsamen Vorratsbehälter über eine Verteilerkammer zugeführt werden,
e) die Glasmenge mittels zweier hinsichtlich der Fördermenge pro Zeiteinheit unabhängig voneinander regelbarer Transporteinrichtungen nebeneinander auf die Glasschmelze aufgebracht und
f) durch kontinuierliche Rotationsbewegungen des Schiebers beiderseits des Schiebearms auf der Glasschmelze verteilt und verschoben werden.

Durch die Erfindung werden ein Verfahren und eine Vorrichtung geschaffen, mit denen es möglich ist, das Beschickungsgut für Glas-Schmelzöfen bei kleinstmöglichem Aufwand für die Herstellung, den Betrieb und die Unterhaltung der Vorrichtung in den Ofen einzuführen und darin gezielt auf Der Schmelzen-Oberfläche zu verteilen und auf dieser auf Fahrtwege zu bringen, die der Strömung der Glasschmelze entsprechen. So ist es beispielsweise möglich, die Erfindung für Querflammenöfen und für U-Flammenöfen zu verwenden und sowohl der Stirnwand als auch den Seitenwänden über der Ofenwanne zuzuordnen und auch dabei weitgehend den Innenraum des Ofens gegenüber der Umgebung abgedichtet zu halten. Die Abdichtung gilt sowohl gegen das Eindringen von Umgebungsluft, die die Ofenatmosphäre stört, als auch umgekehrt gegen das Austreten von Verbrennungsgasen und Hitzestrahlungen, die die Umgebung Und die Umwelt belasten.

Es ist im Zuge weiterer Ausgestaltungen des Verfahrens besonders verteilhaft, wenn - entweder einzeln oder in Kombination:
* durch die Transporteinrichtungen auf der Glasschmelze paarweise Voneinander getrennte Portionen von Glasmenge abgelegt werden,
* die Innenquerschnitte der Transporteinrichtungen gegenüber dem Innenraum des Doghouses zumindest weitgehend abgedichtet gehalten werden,
* Transporteinrichtungen verwendet werden, die als Schneckenförderer Mit Schraubwendeln und rohrförmigen Gehäusen ausgeführt sind, die paarweise und zumindest weitgehend abgedichtet in einer Verschlussplatte der Doghouse-Öffnung angeordnet sind.
* die Wellen der Transporteinrichtungen unter je einem spitzen Winkel Zur Schubrichtung des Schiebers ausgerichtet werden,
* die Transporteinrichtungen der Reihe von Portionen des Glasgemenges auf der Glasschmelze durch Veränderungen der Winkelstellungen des Schiebers zu seiner Vorschubrichtung veränderbar sind, und/oder, wenn
* die Transporteinrichtungen der Portionen des Glasgemenges auf der Glasschmelze durch Veränderungen der Winkelstellungen von Teilflächen des Schiebers zu seiner Vorschubrichtung veränderbar sind.

Die Erfindung betrifft auch eine Vorrichtung zum Beschicken von Glas-Schmelzöfen, die ein Doghouse aufweisen, mit schüttfähigen Glasgemengen
a) mit Transporteinrichtungen für die Einrichtung der Glasgemenge durch eine Doghouse-Öffnung des Glas-Schmeizotens oberhalb des Glasspiegels und
b) mit einem periodisch über einen Schleberarm angetriebenen Schieber für die Verteilung der Glasmenge auf dem Glasspiegel, wobei
c) die Transporteinrichtungen und der Schieberarm an einem verfahrbaren Geräterahmen, der in Richtung auf das Doghouse verfahrbar ist, gelagert und zumindest weitgehend abgedichtet durch die Doghouse-Öffnung des Glas-Schmelzofens hindurchgeführt sind.

Zur Lösung der gleichen Aufgabe und zur Erzielung der gleichen Vorteile ist eine solche Vorrichtung erfindungsgemäss dadurch gekennzeichnet, dass
d) die Transporteinrichtungen über eine Verteilerkammer an einen gemeinsamen Vorratsbehälter für die Glasmenge angeschlossen sind,
e) für die Glasmenge zwei hinsichtlich der Fördermenge pro Zeiteinheit unabhängig voneinander regelbare Transporteinrichtungen nebeneinander in dem Doghouse angeordnet sind und
f) die Transporteinrichtungen beiderseits einer senkrechten virtuellen Mittenebene angeordnet sind, in der der Schieberarm des Schiebers beweglich ist.

Es ist im Zuge weiterer Ausgestaltung der Vorrichtung besonders vorteilhaft, wenn - entweder einzeln oder in Kombination:
* durch die Transporteinrichtungen auf dem Glasspiegel paarweise Voneinander getrennte Portionen von Gasmengen ablegbar sind,
* die Innenquerschnitte der Transporteinrichtungen gegenüber dem Innenraum des Doghouses zumindest weitgehend abgedichtet sind,
* die Transporteinrichtungen als Schneckenförderer mit Schraubenwendein und rohrförmigen Gehäusen ausgebildet sind, die paarweise und zumindest weitgehend abgedichtet in einer Verschlussplatte der Doghouse-Öffnung angeordnet sind,
* der Verschlussplatte ein Hitzeschutzschild vorgelagert ist, dessen Umfang an den äusseren Rand der Doghouse-Öffnung anlegbar ist,
* die Achse der Transporteinrichtungen unter je einem spitzen Winkel Zu einer virtuellen, senkrechten Mittenebene ausgerichtet sind,
* die Winkelstellung des Schiebers zu seinem Schieberarm veränderbar ausgebildet ist,
* der Schieber Teilflächen mit unterschiedlichen Winkelstellungen zu seinem Schieberarm besitzt,
* die Transporteinrichtungen, die Verschlussplatte und das Hitzeschutzschild an einem Geräterahmen befestigt sind, der in Richtung auf das Doghouse in der Weise verfahrbar ist, dass das Hitzschutzschild die Doghouse-Öffnung zumindest weitgehend verschliesst,
* der Geräterahmen zwei waagrechte Rahmen aufweist, die an ihren Ecken durch senkrechte Stützen miteinander verbunden sind,
* in dem Raum zwischen den Stützen eine Plattform angeordnet ist, mit der der Schieberarm verbunden ist und die durch einen starr angebrachten Ausleger mit einem Exzenterantrieb verbunden ist, durch den der Schieber seine Umlaufbahn erhält,
* die andere Seite der Plattform über vertikal beabstandete Zwischengelenke mit waagrechten Achsen derart am Geräterahmen abgestützt ist, dass Bewegungen der Plattform mit waagrechten Komponenten kompensierbar sind,
* auf dem Geräterahmen über einer Verteilerkammer ein Vorratstrichter für das Glasgemenge angeordnet ist, der zwei Schenkel aufweist, die mit den Transporteinrichtungen über trichterförmige Zwischenstücke verbunden sind, und/oder, wenn
* in der Verschlussplatte eine Durchführung für den Schieberarm angeordnet ist, und wenn die Durchführung eine elastomere Einlage mit einem senkrechten Schlitz besitzt, in dem der Schieberarm abgedichtet geführt ist.

Ein Ausführungsbeispiel des Erfindungsgegenstandes und dessen Wirkungsweisen und weitere Vorteile werden nachfolgend anhand der Figuren 1 bis 5 näher erläutert.

Es zeigen:
- Figur 1: einen Vertikalschnitt durch eine Ofenwand, einen Geräterahmen mit Teilen der Beschickungsvorrichtung und durch eine der Transporteinrichtungen für das Glasgemenge,
- Figur 2: eine Draufsicht auf die Teile der Beschickungsvorrichtung nach Figur 1 in vertikaler Richtung,
- Figur 3: eine Innenansicht der Antriebselemente für den Schieber in horizontaler Richtung,
- Figur 4: eine rückwärtige Ansicht der Beschickungsvorrichtung in Richtung auf den Ofen und
- Figur 5: eine Draufsicht auf die Durchführung in Figur 4 in vergrössertem Massstab

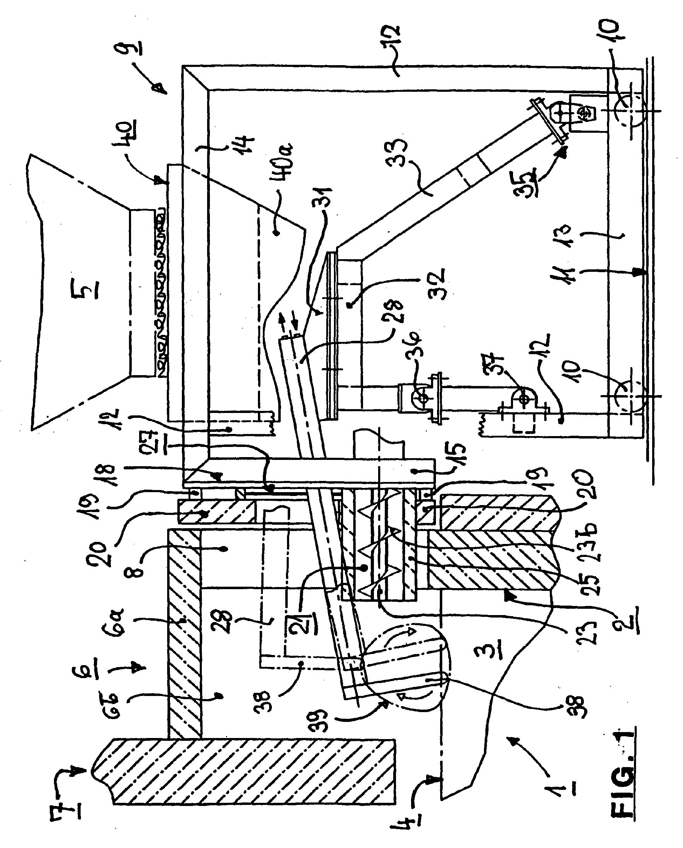

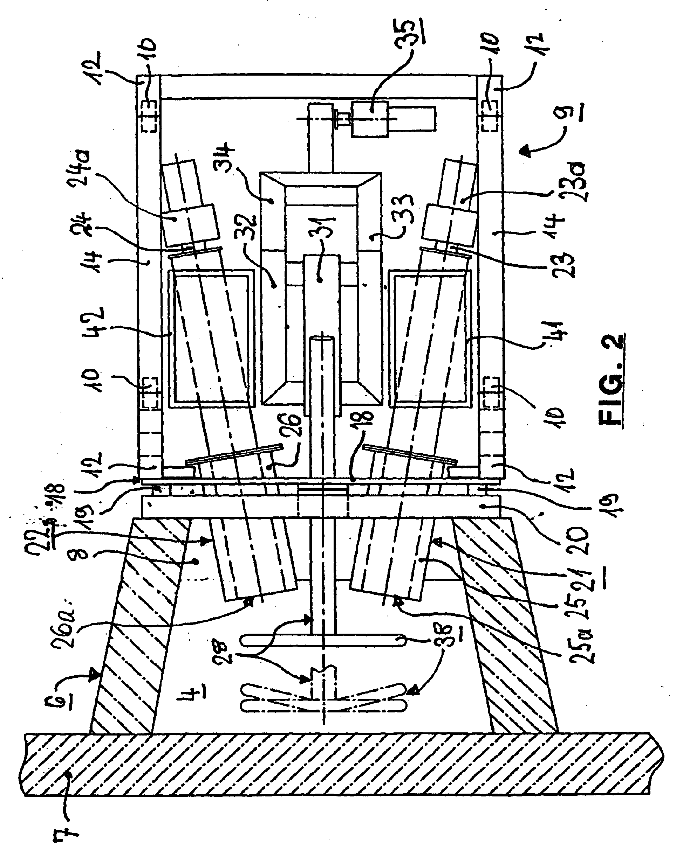

In den Figuren 1 und 2 ist ein Teilausschnitt aus einem Glas-Schmelzofen 1 gezeigt, der eine Schmelzwanne 2 mit einer Glasschmelze 3 mit einem Glasspiegel 4 aufweist. Oberhalb dieses Glasspiegels 4 befindet sich ein sog. "Doghouse" 6 für die Zufuhr des Glasgemenges, das in einem Vorratstrichter 5 zwischengelagert wird. Das Doghouse 6 besitzt eine Doghouse-Abdeckung 6a, zwei Doghouse-Seitenwände 6b und eine Doghouse-Öffnung 8, die einer Ofenwand 7 vorgelagert sind.

Neben dieser Doghouse-Öffnung 8 befindet sich ein Geräterahmen 9, der mittels Rädern 10 auf Schienen 11 verfahrbar ist und der an den senkrechten Kanten eines imaginären Quaders vier Stützen 12 besitzt. Diese sind an den unteren und oberen Enden durch waagrechte Rahmen 13 und 14 verbunden, was auch aus den Figuren 2 bis 4 hervorgeht. Der obere. Rahmen 14 besitzt auf der Ofenseite einen U-förmigen Ausleger 15, an dem eine stabile aus Metall bestehend Verschlussplatte 18 und mittels Abstandshaltern 19 ein Hitzeschutzschild 20 befestigt sind. Durch die Verschlussplatte 18 sind gasdicht zwei Transporteinrichtungen 21 und 22 hindurch geführt, die hier als Schraubenförderer ausgeführt sind und je eine Welle 23 und 24 mit Getriebemotoren 23a und 24a aufweisen. Die Wellen 23 und 24 sind mit ihren Schraubenwendeln 23b und 24b mit geringem Spiel von je einem zylindrischen Gehäuse 25 und 26 umgeben, das in der Verschlussplatte 18 gasdicht befestigt ist und eine Mündung 25a und 26a für den Austritt des Glasgemenges über dem Glasspiegel 4 besitzt. Dadurch werden zusammen mit dem Glasgemenge strahlungsdichte und zumindest weitgehend gasdichte Sperren zwischen dem Innenraum des Doghouses 6 und der Atmosphäre gebildet. Die Gehäuse 25 und 26 können zur Kühlung mit Hohlräumen und Wasseranschlüssen versehen sein, was hier jedoch nicht dargestellt ist.

Durch die Abstandshalter 19 wird an der Verschlussplatte 18 der Hitzeschutzschild 20 gehalten, in dem eine Durchführung 27 für den Schieberarm 28 angeordnet ist. Diese Durchführung 27 besitzt eine flexible Einlage 29, die in ihrer Mitte einen senkrechten Schlitz 30 besitzt (siehe auch Figur 5). Der Hitzeschutzschild 20 kann bis gegen die Ränder der DoghouseÖffnung 8 gefahren werden. Auch dadurch und durch die gute Abdichtung des Schieberarms 28 in der Einlage 29 werden Durchtritte von Strahlungen, Staub und Gasen aus dem Doghouse 6 und Eintritte von Luft aus der Umgebung in das Doghouse 6 drastisch eingeschränkt.

Die Wellen 23 und 24 werden durch je einen der Getriebemotoren 23a und 24a mit regelbaren Drehzahlen angetrieben, so dass voneinander unabhängige Fördermengen pro Zeiteinheit auf den Glasspiegel 4 abgeworfen werden können, die jeweils zwischen 0 und 100 % der gesamten Fördermenge betragen können.

Die Figuren 1, 2 und 4 zeigen in der Zusammenschau Einzelheiten des Antriebs des Schieberarms 28. Dieser ist über ein Zwischenstück 31 innerhalb des Geräterahmens 9 auf einer rahmenförmigen Plattform 32 befestigt, die auf gegenüber liegenden Seiten starr mit Auslegern 33 und 34 verbunden ist. über einen regelbaren motorischen Exzenterantrieb 35 wird die Plattform 32 verschwenkt und parallel zur Zeichenebene verschoben, wobei Zwischengelenke 36 und 37 horizontale Bewegungskomponenten ermöglichen. Am entgegengesetzte Ende ist der Schieberarm 28 innerhalb des Doghouses 6 mit einem Schieber 38 versehen, dessen Unterkante bei der Vorwärtsbewegung periodisch in die Glasschmelze 3 eintaucht und zur Rückwärtsbewegung wieder herausgehoben und hierbei auf einer geschlossenen Umlaufbahn 39 in Pfeilrichtung geführt wird, die durch den Exzenterantrieb 35 und die Auslegung der Zwischenglieder bestimmt wird. Dadurch werden die aus den Transporteinrichtungen 21 und 22 austretenden bzw. abgeworfenen Stoffströme auf dem Glasspiegel 4 in Portionen unterteilt und auf diesem verschoben. Der Schieberarm 28 und der Schieber 38 werden durch Wasser gekühlt, was in Figur 1 durch beiden Pfeile angedeutet ist.

Wie in Figur 2 mit strichpunktierten Linien gezeigt ist, kann der Schieber 38 ganz oder teilweise auch in unterschiedlichen Winkeln am Schieberarm 28 befestigt sein. Dadurch ist es möglich, der Anfangsrichtung der Portionen des Glasgemenges irinerhalb des Doghouses 6 eine Vorzugsrichtung zu geben, wodurch es wiederum möglich ist, die betreffende Vorrichtung mit Doghouses 6 zu verbinden, die an unterschiedlichen Stellen des Umfangs der Schmelzwanne 2 angeordnet sind.

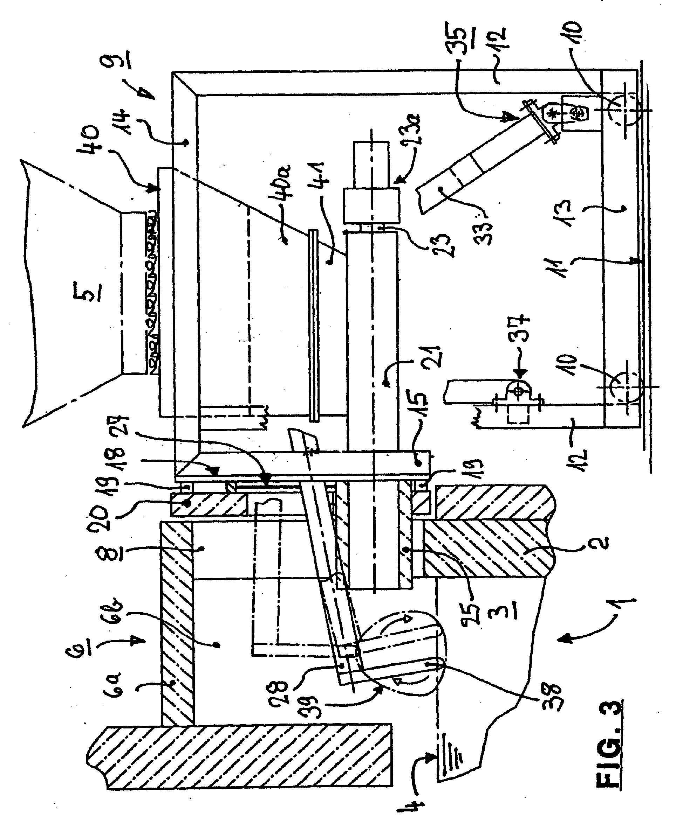

Aus einer Zusammenschau der Figuren 3 und 4 geht noch hervor, in welcher Weise das Glasgemenge der Beschickungsvorrichtung zugeführt und innerhalb dieser verteilt wird. Der Vorratstrichter 5 befindet sich mittig oberhalb des Geräterahmens 9 und mündet in eine Verteilerkammer 40 mit zwei senkrechten Schenkeln 40a und 40b, an die die Transporteinrichtungen 21 und 22 über trichterförmige Zwischenstücke 41 und 42 angeschlossen sind.

### Bezugszeichenliste:

| | |
|---|---|
| 1 | Glas-Schmelzofen |
| 2 | Schmelzwanne |
| 3 | Glasschmelze |
| 4 | Glasspiegel |
| 5 | Vorratstrichter |
| 6 | Doghouse |
| 6a | Doghouse-Abdeckung |
| 6b | Doghouse-Seitenwände |
| 7 | Ofenwand |
| 8 | Doghouse-Öffnung |
| 9 | Geräterahmen |
| 10 | Räder |
| 11 | Schienen |
| 12 | Stützen |
| 13 | Rahmen |
| 14 | Rahmen |
| 15 | Ausleger |
| 18 | Verschlussplatte |
| 19 | Abstandshalter |
| 20 | Hitzeschutzschild |
| 21 | Transporteinrichtung |
| 22 | Transporteinrichtung |
| 23 | Welle |
| 23a | Getriebemotor |
| 23b | Schraubenwendel |
| 24 | Welle |
| 24a | Getriebemotor |
| 24b | Schraubenwendet |
| 25 | Gehäuse |
| 25a | Mündung |
| 26 | Gehäuse |
| 26a | Mündung |
| 27 | Durchführung |
| 28 | Schieberarm |
| 29 | Einlage |
| 30 | Schlitz |
| 31 | Zwischenstück |
| 32 | Plattform |
| 33 | Ausleger |
| 34 | Ausleger |
| 35 | Exzenterantrieb |
| 36 | Zwischengelenke |
| 37 | Zwischengelenke |
| 38 | Schieber |
| 39 | Umlaufbahn |
| 40 | Verteilerkammer |
| 40a | Schenkel |
| 40b | Schenkel |
| 41 | Zwischenstück |
| 42 | Zwisc henstück |

## Patentansprüche

1. Verfahren zum Beschicken von Glas-Schmelzöfen (1), die mindestens ein Doghouse (6) aufweisen, mit schüttfähigen Glasmengen mittels
a) Transporteinrichtungen (21, 22) für die Einführung der Glasgemenge durch eine Doghouse-Öffnung (8) oberhalb des Glasspiegels (4) und
b) mittels eines periodischen über einen Schiebearm (28) angetriebenen Schiebers (38) für die Verteilung der Glasmenge auf der Glasschmelze (3), wobei
c) die Transporteinrichtungen (21, 22) und der Schiebearm (28) an einem verfahrbaren Geräterahmen (9) gelagert sind, der in Richtung auf das Doghouse verfahrbar ist, und zumindest weitgehend abgedichtet durch die Doghouse-Öffnung (8) hindurchgeführt werden,
**dadurch gekennzeichnet, dass**
d) die Glasmenge den Transporteinrichtungen (21, 22) aus einem gemeinsamen Vorratsbehälter (5) über eine Verteilerkammer (40) zugeführt werden,
e) die Glasmenge mittels zweier hinsichtlich der Fördermengen pro Zeiteinheit unabhängig voneinander regelbaren Transporteinrichtungen (21, 22) nebeneinander auf die Glasschmelze (3) aufgebracht und
f) durch kontinuierliche Rotationsbewegungen des Schiebers (38) beiderseits des Schieberarms (28) auf der Glasschmelze (3) verteilt und verschoben werden.

2. Verfahren nach Anspruch 1, **dadurch gekennzeichnet, dass** die Transportrichtungen der Reihen von Portionen des Glasgemenges auf der Glasschmelze (3) durch Veränderung der Winkelstellungen des Schiebers (38) und insbesondere der Winkelstellungen von Teilflächen des Schiebers (38) zu seiner Vorschubrichtung veränderbar sind.

3. Vorrichtung zum Beschicken von Glas-Schmelzöfen (1), die ein Doghouse (6) aufweisen, mit schüttfähigen Glasgemengen
a) mit Transporteinrichtungen (21, 22) für die Einführung der Glasgemenge durch eine Doghouse-Öffnung (8) des Glas-Schmelzofens (1) oberhalb des Glasspiegels (4) und
b) mit einem periodisch über einen Schieberarm (28) angetriebenen Schieber (38) für die Verteilung der Glasgemenge auf dem Glasspiegel (4), wobei
c) die Transporteinrichtungen (21, 22) und der Schieberarm (28) an einem verfahrbaren Geräterahmen (9), der in Richtung auf das Doghouse verfahrbar ist, gelagert und zumindest weitgehend abgedichtet durch die Doghouse-Öffnung (8) des Glas-Schmelzofens (1) hindurchgeführt sind,
**dadurch gekennzeichnet, dass**
d) die Transporteinrichtung (21, 22) über eine Verteilerkammer (40) an einem gemeinsamen Vorratsbehälter (5) für die Glasmenge angeschlossen sind,
e) für die Glasmenge zwei hinsichtlich der Fördermenge pro Zeiteinheit unabhängig voneinander regelbare Transporteinrichtungen (21, 22) nebeneinander in dem Doghouse (6) angeordnet sind und
f) die Transporteinrichtungen (21, 22) beiderseits einer senkrechten virtuellen Mittenebene angeordnet sind, in der der Schieberarm (28) des Schiebers (38) beweglich ist.

4. Vorrichtung nach Anspruch 3, **dadurch gekennzeichnet, dass** die Innenquerschnitte der Transporteinrichtungen (21, 22) gegenüber dem Innenraum des Doghouses (6) zumindest weitgehend abgedichtet sind.

5. Vorrichtung nach Anspruch 3, **dadurch gekennzeichnet, dass** die Transporteinrichtungen (21, 22) als Schneckenförderer mit Schraubenwendeln (23b, 24b) und rohrförmigen Gehäusen (25, 26) ausgebildet sind, die paarweise und zumindest weitgehend abgedichtet in einer Verschlussplatte (18) der Doghouse-Öffnung (8) angeordnet sind.

6. Vorrichtung nach Anspruch 3, **dadurch gekennzeichnet, dass** der Verschlussplatte (18) ein Hitzeschutzschild (20) vorgelagert ist, dessen Umfang an den äußeren Rand der Doghouse-Öffnung (8) anlegbar ist.

7. Vorrichtung nach Anspruch 3, **dadurch gekennzeichnet, dass** die Achsen der Transporteinrichtungen (21, 22) unter je einem spitzen Winkel zu einer virtuellen, senkrechten Mittelebene ausgerichtet sind.

8. Vorrichtung nach Anspruch **3, dadurch gekennzeichnet, dass** die Winkelstellung des Schiebers (38) zu seinem Schieberarm (28) veränderbar ausgebildet ist.

9. Vorrichtung nach Anspruch 8, **dadurch gekennzeichnet, dass** der Schieber (38) Teilflächen mit unterschiedlichen Winkelstellungen zu seinem Schieberarm (28) besitzt.

10. Vorrichtung nach mindestens einem der Ansprüche 3 bis 9, **dadurch gekennzeichnet, dass** die Transporteinrichtungen (21, 22), die Verschlussplatte (18) und das Hitzeschutzschild (20) an einem Geräterahmen (9) befestigt sind, der in Richtung auf das Doghouse (6) in der Weise verfahrbar ist, dass das Hitzeschutzschild (20) die Doghouse-Öffnung (8) zumindest weitgehend verschließt.

11. Vorrichtung nach Anspruch 10, **dadurch gekennzeichnet, dass** der Geräterahmen (9) zwei waagerechte Rahmen (13, 14) aufweist, die an ihren Ecken durch senkrechte Stützen (12) miteinander verbunden sind und dass in dem Raum zwischen den Stützen (12) eine Plattform (32) angeordnet ist, mit der der Schieberarm (28) verbunden ist und die durch einen starr angebrachten Ausleger (33) mit einem Exzenterantrieb (35) verbunden ist, durch den der Schieber (38) seine Umlaufbahn (39) erhält.

12. Vorrichtung nach Anspruch 11, **dadurch gekennzeichnet, dass** die andere Seite der Plattform (32) über vertikal beabstandete Zwischengelenke (36, 37) mit waagerechten Achsen derart am Geräterahmen (9) abgestützt ist, dass Bewegungen der Plattform (32) mit waagerechten Komponenten kompensierbar sind.

13. Vorrichtung nach Anspruch 10, **dadurch gekennzeichnet, dass** auf dem Geräterahmen (9) über einer Verteilerkammer (40) ein Vorratstrichter (5) für das Glasgemenge angeordnet ist, der zwei Schenkel (40a, 40b) aufweist, die mit den Transporteinrichtungen (21, 22) über trichterförmige Zwischenstücke (41, 42) verbunden sind.

14. Vorrichtung nach Anspruch 10, **dadurch gekennzeichnet, dass** in der Verschlussplatte (18) eine Durchführung (27) für den Schieberarm (28) angeordnet ist, und dass die Durchführung (27) eine elastomere Einlage (29) mit einem senkrechten Schlitz (30) besitzt, in dem der Schieberarm (28) abgedichtet geführt ist.

## Claims

1. A method for supplying glass melting furnaces (1) comprising at least one doghouse (6) with free-flowing glass mixtures by means of
a) transport devices (21, 22) for introducing the glass mixture through a doghouse opening (8) above the glass level (4) and
b) a pusher (38) that is periodically driven by a pusher arm (28) in order to distribute the glass mixture over the glass melt (3), wherein
c) the transport devices (21, 22) and the pusher arm (28) are supported on a device frame (9) displaceable in the direction of the doghouse and fed through the doghouse opening (8) in an at least largely sealed fashion,
**characterized in that**
d) the glass mixture is fed to the transport devices (21, 22) from a common supply container (5) via a distribution chamber (40),
e) the glass mixture is applied onto the glass melt (3) by means of two transport devices (21, 22) that are arranged adjacent to one another and can be independently controlled with respect to the delivered quantity per time unit and
f) distributed over the glass melt (3) to both sides of the pusher arm (28) due to continuous rotary motions of the pusher (38).

2. The method according to Claim 1, **characterized in that** the transport directions of the rows of portions of the glass mixture onto the glass melt (3) can be changed by changing the angular positions of the pusher (38) and, in particular, the angular position of subareas of the pusher (38) relative to its feed direction.

3. A device for supplying glass melting furnaces (1) comprising a doghouse (6) with free-flowing glass mixtures, featuring
a) transport devices (21, 22) for introducing the glass mixture through a doghouse opening (8) of the glass melting furnace (1) above the glass level (4) and
b) a pusher (38) that is periodically driven by a pusher arm (28) in order to distribute the glass mixture over the glass level (4), wherein
c) the transport devices (21, 22) and the pusher arm (28) are supported on a device frame (9) displaceable in the direction of the doghouse and fed through the doghouse opening (8) of the glass melting furnace (1) in an at least largely sealed fashion,
**characterized in that**
d) the transport devices (21, 22) are connected to a common supply container (5) for the glass mixture via a distribution chamber (40),
e) two transport devices (21, 22) for the glass mixture that can be independently controlled with respect to the delivered quantity per unit of time are arranged adjacent to one another in the doghouse (6), and
f) the transport devices (21, 22) are arranged to both sides of a virtual vertical center plane, in which the pusher arm (28) of the pusher (38) can be moved.

4. The device according to Claim 3, **characterized in that** the inside cross sections of the transport devices (21, 22) are at least largely sealed relative to the interior of the doghouse (6).

5. The device according to Claim 3, **characterized in that** the transport devices (21, 22) are realized in the form of screw conveyors with helical screws (23b, 24b) and tubular housings (25, 26) that are arranged in a closing plate (18) of the doghouse opening (8) in a paired and at least largely sealed fashion.

6. The device according to Claim 3, **characterized in that** a protective heat shield (20), the circumference of which can be placed against the outer edge of the doghouse opening (8), is arranged in front of the closing plate (18).

7. The device according to Claim 3, **characterized in that** the axes of the transport devices (21, 22) are respectively aligned at an acute angle relative to a virtual vertical center plane.

8. The device according to Claim 3, **characterized in that** the angular position of the pusher (38) relative to its pusher arm (28) is variable.

9. The device according to Claim 8, **characterized in that** the pusher (38) has subareas with different angular positions relative to its pusher arm (28).

10. The device according to at least one of Claims 3 to 9, **characterized in that** the transport devices (21, 22), the closing plate (18) and the protective heat shield (20) are mounted on a device frame (9) that can be displaced in the direction of the doghouse (6) in such a way that the protective heat shield (20) at least largely closes the doghouse opening (8).

11. The device according to Claim 10, **characterized in that** the device frame (9) features two horizontal frames (13, 14) that are connected to one another on their corners by vertical supports (12), and **in that** a platform (32) is arranged in the space between the supports (12), wherein the pusher arm (28) is connected to said platform and the platform is connected to an eccentric drive (35) that defines the orbit (39) of the pusher (38) by means of a rigidly arranged extension arm (33).

12. The device according to Claim 11, **characterized in that** the other side of the platform (32) is supported on the device frame (9) by means of intermediate articulations (36, 37) with horizontal axes that are vertically spaced apart from one another, namely in such a way that motions of the platform (32) with horizontal components can be compensated.

13. The device according to Claim 10, **characterized in that** a supply hopper (5) for the glass mixture is arranged on the device frame (9) above a distribution chamber (40), wherein said supply hopper features two branches that are connected to the transport devices (21, 22) by means of funnel-shaped intermediate elements (41, 42).

14. The device according to Claim 10, **characterized in that** a lead-through (27) for the pusher arm (28) is arranged in the closing plate (18), and **in that** the lead-through (27) features an elastomer insert (29) with a vertical slot (30), in which the pusher arm (28) is guided in a sealed fashion.

## Revendications

1. Procédé d'enfournement dans des arches à fritter (1) présentant au moins une niche d'enfournement (6) de frittes de verre aptes à être versées au moyen
a) de dispositifs de transport (21, 22) permettant l'introduction de la fritte de verre dans un orifice de la niche d'enfournement (8) au-dessus du niveau du verre (4) et
b) au moyen d'un curseur (38) entraîné périodiquement par un bras coulissant (28) permettant de répartir la fritte de verre sur la coulée de verre (3), dans lequel
c) les dispositifs de transport (21, 22) et le bras coulissant (28) sont logés sur un châssis d'appareil déplaçable (9) qui est déplaçable en direction de la niche d'enfournement et est conduit au moins en grande partie hermétiquement à travers l'ouverture de la niche d'enfournement (8),
**caractérisé en ce que**
d) la fritte de verre est acheminée aux dispositifs de transport (21, 22) depuis une réserve commune (5) en passant par une cellule de répartition (40),
e) la fritte de verre est apportée dans la coulée de verre (3) au moyen de dispositifs de transport (21, 22) réglables indépendamment les uns des autres pour ce qui est des quantités convoyées par unité de temps et
f) est répartie par des mouvements de rotation continus du curseur (38) des deux côtés du bras coulissant (28) sur la coulée de verre (3).

2. Procédé selon la revendication 1, **caractérisé en ce que** les sens de transport des rangées de sections de la fritte de verre peuvent être modifiés en changeant les positions angulaires du curseur (38) et en particulier les positions angulaires de surfaces partielles du curseur (38) par rapport à son sens d'avance.

3. Dispositif d'enfournement dans des arches à fritter (1) présentant une niche d'enfournement (6) de frittes de verre aptes à être versées au moyen
a) de dispositifs de transport (21, 22) permettant l'introduction de la fritte de verre dans un orifice de la niche d'enfournement (8) de l'arche à fritter (1) sur la surface du verre (4) et
b) au moyen d'un curseur (38) entraîné périodiquement par un bras coulissant (28) permettant de répartir la fritte de verre sur la coulée de verre (3), dans lequel
c) les dispositifs de transport (21, 22) et le bras coulissant (28) sont logés sur un châssis d'appareil déplaçable (9) qui est déplaçable en direction de la niche d'enfournement et est conduit au moins en grande partie hermétiquement à travers l'ouverture de la niche d'enfournement (8) de l'arche à fritter (1),
**caractérisé en ce que**
d) le dispositif de transport (21, 22) est raccordé par une cellule de répartition (40) à une réserve commune (5) pour la fritte de verre,
e) pour la fritte de verre, deux dispositifs de transport (21, 22) réglables indépendamment l'un des l'autre pour ce qui est de la quantité convoyée par unité de temps sont disposés l'un près de l'autre dans la niche d'enfournement (6) et
f) les dispositifs de transport (21, 22) sont disposés des deux côtés d'un plan médian virtuel dans lequel le bras coulissant (28) du curseur (38) est mobile.

4. Dispositif selon la revendication 3, **caractérisé en ce que** les sections transversales intérieures des dispositifs de transport (21, 22) sont isolées du moins en grande partie par rapport à l'espace intérieur de la niche d'enfournement (6).

5. Dispositif selon la revendication 3, **caractérisé en ce que** les dispositifs de transport (21, 22) se présentent sous la forme de convoyeurs à vis à spires hélicoïdales (23b, 24b) et de boîtiers tubulaires (25, 26) qui sont disposés par paires du moins en grande partie hermétiquement dans une plaque obturatrice (18) de l'ouverture de la niche d'enfournement (6).

6. Dispositif selon la revendication 3, **caractérisé en ce que,** en amont de la plaque obturatrice (18), se trouve un bouclier anti-chaleur (20) dont la circonférence peut être posée sur le bord extérieur de l'ouverture de la niche d'enfournement (6).

7. Dispositif selon la revendication 3, **caractérisé en ce que** les essieux des dispositifs de transport (21, 22) sont orientés chacun suivant un angle aigu par rapport à un plan médian vertical virtuel.

8. Dispositif selon la revendication 3, **caractérisé en ce que** la position angulaire du curseur (38) par rapport à son bras coulissant (28) est conçue pour être modifiable.

9. Dispositif selon la revendication 8, **caractérisé en ce que** le curseur (38) possède des surfaces partielles ayant différentes positions angulaires par rapport à son bras coulissant (28).

10. Dispositif selon au moins une des revendications 3 à 9, **caractérisé en ce que** les dispositifs de transport (21, 22), la plaque obturatrice (18) et le bouclier anti-chaleur (20) sont fixés à un châssis d'appareil (9) qui est déplaçable en direction de la niche d'enfournement (6) de manière à ce que le bouclier anti-chaleur (20) ferme au moins en grande partie l'ouverture de la niche d'enfournement (6).

11. Dispositif selon la revendication 10, **caractérisé en ce que** le châssis d'appareil (9) présente deux cadres horizontaux (13, 14) qui sont reliés ensemble au niveau de leurs angles par des poteaux verticaux (12) et que, dans l'espace entre les poteaux (12), est disposée une plateforme (32) à laquelle le bras coulissant (28) est raccordé et qui est reliée par une flèche (32) installée fixement à une commande excentrique (35) à laquelle le curseur (38) doit sa piste de roulement (39).

12. Dispositif selon la revendication 11, **caractérisé en ce que** l'autre côté de la plateforme (32) s'appuie sur le cadre d'appareil (9) par des articulations intermédiaires (36, 37) espacées verticalement dotées d'essieux horizontaux de manière à ce que les mouvements de la plateforme (32) soient compensables par des composants horizontaux.

13. Dispositif selon la revendication 10, **caractérisé en ce que,** sur le cadre d'appareil (9), au-dessus d'une cellule de répartition (40), est disposé un entonnoir de réserve (5) pour la fritte de verre, qui présente deux branches (40a, 40b) qui sont raccordées aux dispositifs de transport (21, 22) par des pièces intermédiaires (41, 42) en forme d'entonnoirs.

14. Dispositif selon la revendication 10, **caractérisé en ce que,** dans la plaque obturatrice (18), est disposé un passage (27) pour le bras coulissant (28) et que le passage (27) possède une garniture en élastomère (29) dotée d'une fente verticale (30) dans laquelle le bras coulissant (28) est conduit hermétiquement.
